# EUROPEAN PATENT SPECIFICATION

(11) **EP 2 357 389 B1**
(45) Date of publication and mention of the grant of the patent: **03.09.2014**
(21) Application number: 10190416.7
(22) Date of filing: 09.11.2010
(51) Int. Cl.: F16L 13/14, F16J 15/10

(54) **Press fitting apparatus having a sealing ring**
Pressfitting Vorrichtung mit einem Dichtring
Appareil de sertissage ayant une bague d'étanchéité

(30) Priority: 01.02.2010 IT MI20100136
(43) Date of publication of application: 17.08.2011
(73) Proprietor: Fra.Bo S.P.A., 25027 Quinzano d'oglio (BS) (IT)
(72) Inventor: Bonetti, Francesco, 25027, QUINZANO D'OGLIO (BS) (IT)
(74) Representative: Mittler, Enrico

(56) References cited:
- EP-A1- 1 555 473
- EP-A1- 1 847 753
- DE-C1- 19 722 935
- JP-A- 8 226 582

## Description

The present invention relates to a press fitting apparatus having a sealing ring.

Press fitting apparatuses for tubes equipped with a sealing ring are known in the state of the art; the sealing ring has a physical conformation such that it allows fluid leakages outside the tube before the application of the pressing action.

Patent JP 08226582 describes a circular seal provided with a depressed part in one part of the peripheral inner edge and of the peripheral outer edge and with one projecting part on both the sides. The circular seal is mounted within the circular bead on the internal surface of the receiving opening of the socket of the joining pipe. Thereby, when the joining pipe is inserted into the socket, the projecting part of the peripheral inner and outer edges of the circular seal is compressed and interstitial fluid passages are formed in the gap between the depressed part, the peripheral external surface of the joining pipe and the bottom of the circular bead. Therefore, even if the tightening of the socket part and the joining pipe by means of pressing tools is forgotten, water (or air) leakages may be found through the interstitial fluid passages in case the hydraulic pressure (or the air pressure) is verified, thus obtaining hight safety pipes.

Patent EP 1847753 B1, which discloses the preamble of claim 1, describes a press fitting system comprising a tube, a fitting and a sealing ring arranged within a bead of a press fitting into which the tube should be inserted. The press fitting system has at least one gap between the fitting along with the sealing ring and the tube which is closed by applying a pressing action to at least one portion of the fitting to provide a non-removable sealed connection between tube and fitting; the sealing ring has at least a first portion along most of its circumference which is defined by a substantially circular cross section having a given diameter. The gap is determined by a second portion of the sealing ring which deviates from the substantially circular cross section of the first portion, thus providing at least one recess oriented towards at least the inserted tube and at least one projection. Each first portion of the sealing ring has an outer diameter before being fitted with the fitting bead which is greater than the inner diameter of the bead, and an inner diameter before the insertion of the tube which is smaller than the outer diameter of the tube. Moreover, the sealing ring has at least one pair of second diametrically opposite portions in which each second portion of the sealing ring comprises one recess between two projections.

In view of the state of the art, it is the object of the present invention to provide a press fitting apparatus having a sealing ring which is different from those known.

In accordance with the present invention, said object is achieved by a press fitting apparatus comprising a tube, a fitting and a sealing ring arranged within a bead of the press fitting into which the tube is to be inserted, said press fitting apparatus comprising at least one gap between the fitting together with the sealing ring and the tube, which is closed by applying a pressing action to at least one portion of the fitting to provide a non-removable sealed connection between tube and fitting, the sealing ring comprising at least a first portion along most of its circumference which is defined by a substantially circular cross section having a given diameter, said gap being determined by a second portion of the sealing ring which deviates from said substantially circular cross section of the first portion by providing at least one recess oriented towards the inserted tube and arranged between two projections, characterized in that said recess is inclined according to a preset angle with respect to the axis of the inserted tube and said two projections comprises first and second projections having different heights from the surface of the sealing ring.

Due to the present invention, a press fitting apparatus may be provided, in which the at least one inclined recess of the sealing ring allows increased closure easiness once the fitting has been pressed.

Furthermore, the projections having different heights existing on the sides of the recess minimize the interference when inserting the tube into the fitting.

The sealing ring preferably comprises three recesses and three pairs of projections having different heights arranged on three separate parts of the sealing ring, arranged at three different angles and not corresponding to the zones of minimum deformation upon the pressing action of the tool used for compressing the fitting on the tube; thereby the risk of having non-pressed recesses is minimize.

The features and advantages of the present invention will become apparent from the following detailed description of a practical embodiment thereof, shown by way of non-limiting example in the accompanying drawings, in which:
figure 1 is a perspective view of the press fitting apparatus in accordance with the present invention;
figure 2 is a front view of the apparatus in figure 1;
figure 3 is a cross section view of the apparatus in figure 2 according to line III-III;
figure 4 is a perspective view of the apparatus in figure 1 having parts removed;
figure 5 is a side view of the apparatus in figure 4;
figure 6 is a perspective view of the sealing ring of the apparatus in figure 1;
figure 7 is a front view of the sealing ring in figure 6;
figure 8 is a sectional view of the sealing ring in figure 7 according to line VIII-VIII;
figure 9 is a part of a detail of the sealing ring in figure 6;
figure 10 is a side view of the sealing ring in figure 6;
figure 11 is a cross section view of the sealing ring in figure 10.

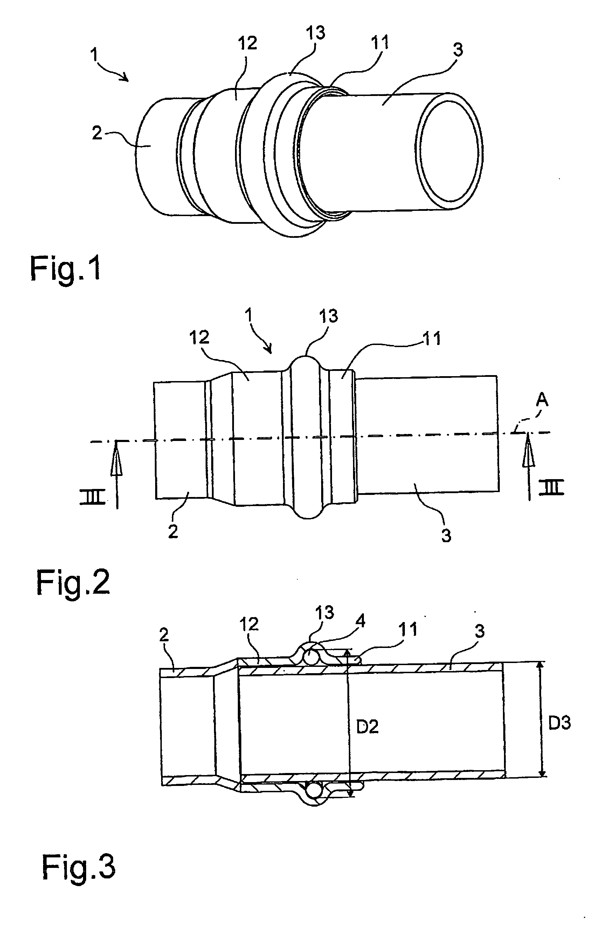

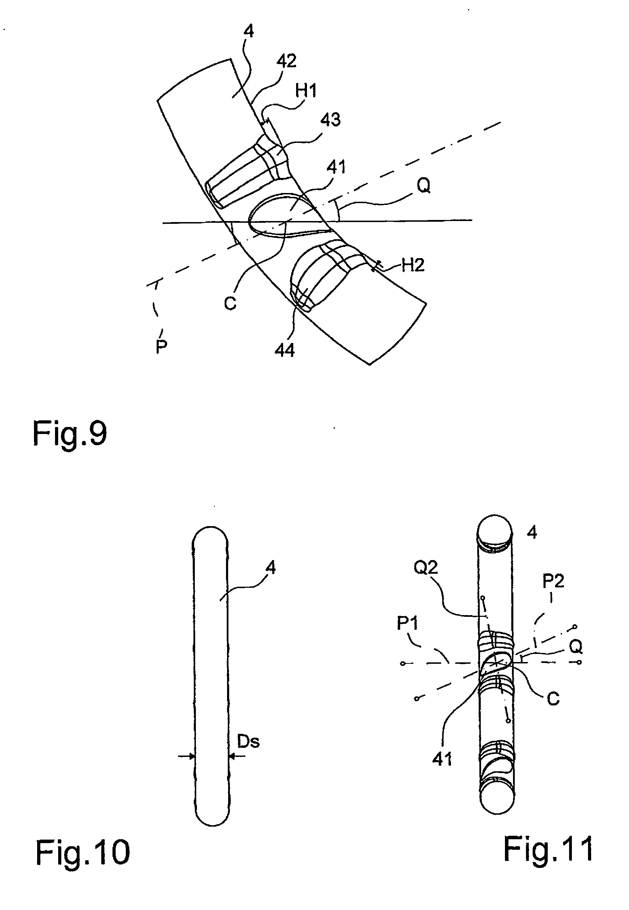

With reference to figures 1-11, a press fitting apparatus 1 is shown in accordance with the present invention. As shown in figures 1-3, apparatus 1 comprises a fitting 2, a tube 3 and a sealing ring 4; fitting 2 and tube 3 are preferably made of metal, while the sealing ring is preferably made of elastomeric material. Fitting 2 comprises two cylindrical portions 11 and 12 at both the sides of a bead 13 in which the sealing ring 4 is inserted. Bead 13 preferably has a toroidal shape.

Once the sealing ring 4 has been installed within bead 13 and tube 3 is installed within fitting 2 over a preset length, the fitting is subjected to cold deformation with the aid of pliers of suitable shape (not shown in the figures). Thereby, the sealing upon the pressurized fluid exiting is ensured by compressing the sealing ring 4 between tube 3 and fitting 2, both deformed by pliers seizure, and the mechanical sealing of tube 3 and fitting 2 assembly is ensured against a possible slipping off of the tube due to their deformation upon the pressing action of the pliers.

Before the pressing action of the pliers, independently from the interference conditions between tube 3 and sealing ring 4, the sealing ring 4 should allow the apparent leakage of the conveyed fluid; after the pressing action of the pliers, the sealing ring 4 should prevent the fluid from leaking.

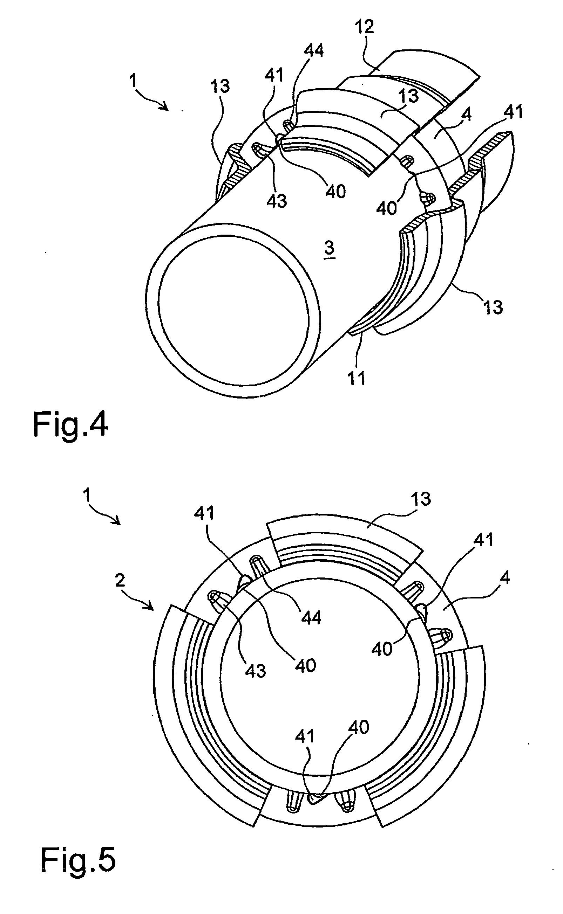

As better shown in figures 4-10, sealing ring 4 comprises at least one recess or channel 41 in the internal part 42 of sealing ring 4, i.e. in the part facing tube 3, the tube 3 being inserted into fitting 2; recess 41 is arranged between a pair of projections 43 and 44, i.e. extensions of the sealing ring 4 from the internal surface 42 towards the central part of ring 4, having different heights H1, H2 with respect to the surface of the internal part 42 of sealing ring 4. Recess 41 comprises a thickness decrease of the sealing ring 4 and the projections 43, 44 are preferably adjacent to the recess 41.

Sealing ring 4 has a circular section perpendicular to the fluid flow direction in a first portion 48 which is most of its circumference; the same sealing ring 4 has second portions 49, in which recesses 41 and projections 43, 44 are provided, in which the cross section is no longer circular in shape. Recess 41 has a defined size according to the size of the sealing ring 4.

In order to avoid any movement of the sealing ring 4 when it is engaged with fitting 2 during the insertion of tube 3, i.e. when the sealing ring 4 is within bead 13, exactly because of the compression due to bead 13, the first portions of the sealing ring 4 switch from an outer diameter D1' which is greater than the inner bead diameter D2 to a diameter which is substantially similar to an inner diameter D1" smaller than the outer diameter D3 of tube 3.

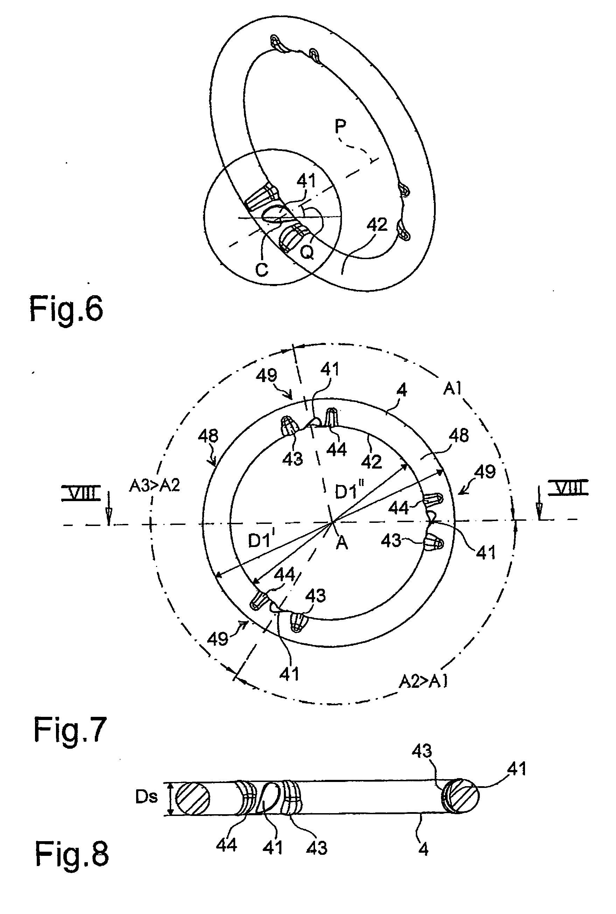

Recess 41 is inclined in accordance with a given angle Q with respect to an axis P parallel to the axis A passing through the centre point of the sealing ring 4 and through the centre point of tube 3, i.e. the symmetry axis of the tube, once it has been inserted into fitting 2 and with the sealing ring 4 being inserted into bead 13, as better shown in figures 6, 9 and 11; preferably, said angle Q is a function of the thickness Ds of sealing ring 4, i.e. of the cord diameter Ds of the first portion 48 of sealing ring 4. More preferably, said angle Q is 20 degrees. The inclination of recess 41 of the angle Q allows an increased easiness in closing the recess 41 itself once fitting 2 has been pressed on tube 3 by means of the pressing action of the pliers. Preferably, said angle Q is the angle formed by plane P1 passing through axis P and axis A, passing through the centre C of recess 41 and transversal to the whole sealing ring 4, and by plane P2 passing through the centre C of recess 41, transversal to the whole seal 4 and intersecting plane P1 in a diametrical axis passing through the centre C of recess 41 and passing through, for example, the end points opposite to the recess, having the greatest distance from the centre of the recess.

Projections 43 and 44 on the sides of recess 41 should have different heights H1, H2 for minimizing the interference when inserting tube 3 into fitting 2. Projections 43 and 44 are symmetrical with respect to the centre of recess 41 and are preferably oriented parallelly to the axis A passing through the centre of the sealing ring 4 and through the centre of tube 3 once it has been inserted into fitting 2, with the sealing ring 4 being inserted into bead 13.

The elastomeric material of projections 43 and 44 migrates towards the recesses 41 during the pressing operation of the pliers.

Sealing ring 4 preferably comprises three recesses 41 each arranged between one pair of projections 43, 44 having different heights with respect to the surface of the internal part 42; in particular, projection 43 has a height H1 which is greater than the height H2 of projection 44 with respect to the surface of the internal part 42 of the sealing ring 4. The three recesses are arranged on the internal part 42 of the sealing ring 4 at distances given by angles A1, A2 and A3, which are different from one another, and preferably so that angle A3 is greater than angle A2 which, in turn, should be greater than angle A1. The three recesses 41 are arranged in parts not simultaneously corresponding to the zones of minimum deformation upon the pressing action of the tool or pliers used for compressing the fitting on the tube; thereby, the risk of having unclosed recesses after the pressing action of the pliers is minimized.

Once the sealing ring has been externally inserted into tube 3 and into bead 13 of fitting 2, as better shown in figures 4 and 5, each recess 41 defines a gap 40 which allows the leakage of the fluid passing in tube 3 outside the press fitting apparatus. Projections 43 and 44 appear almost completely compressed once the sealing ring 4 has been inserted on tube 3, but they serve the main function of preventing the recesses 41 from being closed once the sealing ring 4 has been inserted on tube 3.

The pairs of projections 43 and 44 engage tube 3 in two different moments, first the projection 43 and then the projection 44, thus creating a lower resistance upon the insertion on tube 3, with respect to the case in which both have the same height with respect to the surface of the internal part 42 of the sealing ring 4. When tube 3 engages projection 43 there is a void between projection 44 and the tube itself.

The heights of projections 43 and 44 with respect to the surface of the internal part 42 of the sealing ring 4 are preferably defined in percentage on the thickness of the sealing ring, i.e. on the cord diameter Ds of the first portion 48 of the sealing ring 4. The height H1 of projection 43 ranges from 5% to 15% of the thickness Ds of the sealing ring 4, while the height H2 of projection 44 ranges from 3% to 8% of the thickness Ds of the sealing ring 4. The size of projections 43, 44 ranges according to the size of sealing ring and angle Q; the size of projections 43, 44 is of some millimetres.

The depth of recess 41 preferably ranges from 5% to 15% of the thickness Ds of the sealing ring 4.

Recess 41 is defined by the revolution cut of an elliptic profile along a ring path. Such a path is conveniently inclined and therefore confers the characteristic inclined orientation of the angle Q to the recess 41. The revolution path of the elliptic profile preferably lies on the plane P2, while the elliptic profile which generates the recess 41, as a subtraction of rotational volume with respect to the toroidal ring of the first portion 48, preferably passes through a plane Q2 perpendicular to plane P2 and to sealing ring 4 and passing through the centre C of the recess.

Also in this case, projections 43, 44 are defined by the revolution cut of an elliptic profile about a ring path. The volume obtained by means of the revolution is added to that of the sealing ring 4 having a simple toroidal geometry. The asymmetrical conformation of the revolution path determines the particular asymmetrical geometry of projections 43, 44.

The elliptic profile is a regular profile and therefore suitable for creating a body as that of projections 43, 44 and recess 41, obtainable by means machining. This allows short processing time and lower complexity in constructing the equipment (moulds) for manufacturing the detail with a low overall cost.

## Claims

1. Press fitting apparatus comprising a tube (3), a fitting (2) and a sealing ring (4) to be housed within a bead (13) of the press fitting into which the tube (3) is to be inserted, said press fitting apparatus comprising at least a gap (4) between the press fitting together with the sealing ring and the tube which is closed by applying a pressing action to at least one portion of the press fitting for providing a non removable sealed connection between the tube and the press fitting, the sealing ring (4) comprising at least one first portion (48) along the majority of its circumference being defined by a substantially circular cross-section having a given diameter (D1', D1"), said gap being determined by a second portion (49) of the sealing ring having a cross-section which deviates from said substantially circular cross-section of the first portion by providing at least one recess (41) oriented towards the inserted tube and placed between two projections (43, 44), **characterized in that** said recess (41) is inclined according to a given angle (Q) with respect to the axis (A) of the inserted tube and said two projections (43, 44) comprise a first and a second projection having different heights (H1, H2) from the surface (42) of the sealing ring.

2. Apparatus according to claim 1, **characterized by** comprising three recesses (41) each one arranged between a couple of said first (43) and second (45) projection having different heights (H1, H2) from the surface (42) of the sealing ring, said three recesses (41) being arranged on three parts of the internal surface (42) of the sealing ring which are arranged at angles (A1, A2, A3) different from each other.

3. Apparatus according to claim 1, **characterized in that** each recess (41) has a depth comprised in the range from 5% to 15% of the cord diameter (Ds) of the first portion of the sealing ring (4).

4. Apparatus according to claim 1, **characterized in that** said first projection (43) has a height (H1) from the internal surface (42) of the sealing ring comprised in the range from 5% to 15% of the cord diameter (Ds) of the first portion of the sealing ring (4).

5. Apparatus according to claim 1, **characterized in that** said second projection (44) has a height (H2) from the internal surface (42) of the sealing ring comprised in the range from 3% to 8% of the cord diameter (Ds) of the first portion of the sealing ring (4).

6. Apparatus according to claim 1, **characterized in that** each recess (41) is determined by the revolution cut of an elliptic profile along a ring path.

7. Apparatus according to claim 1, **characterized in that** each projection (43, 44) is determined by the revolution addition of an elliptic profile along a ring path.

8. Apparatus according to claim 1, **characterized in that** the inclination angle (Q) of the recess (41) with respect to the axis (A) of the inserted tube is a function of the cord diameter (Ds) of the first portion of the sealing ring (4).

9. Apparatus according to claim 1, **characterized in that** the angle (Q) is comprises between a first plane (P1) including an axis (P) parallel to said axis (A) passing through the centre point of the inserted tube and the same axis (A) passing through the centre point of the inserted tube and the centre point of the recess (41) of the sealing ring and transversal to the whole sealing ring (4) and a second plane (P2) including the centre point of the recess (41), transversal to the whole sealing ring (4) and intersecting the first plane (P1) on one diameter axis passing through the centre point (C) of the recess (41).

## Patentansprüche

1. Pressfittingvorrichtung mit einer Röhre (3), einem Fitting (2) und einem Dichtungsring (4), der innerhalb einer Sicke (13) des Pressfittings unterzubringen ist, in den die Röhre (3) einzufügen ist, wobei die Pressfittingvorrichtung zumindest einen Spalt (4) zwischen dem Pressfitting zusammen mit dem Dichtring und der Röhre aufweist, der durch Aufbringen einer Druckwirkung auf zumindest einen Abschnitt des Pressfittings geschlossen wird, um eine nichtentfernbare, abgedichtete Verbindung zwischen der Röhre und dem Pressfitting vorzusehen, wobei der Dichtungsring (4) zumindest einen ersten Abschnitt (48) aufweist, der entlang des größten Teils seines Umfanges durch einen im Wesentlichen runden Querschnitt definiert ist, der einen vorgegebenen Durchmesser (D1', D1") hat, wobei der Spalt durch einen zweiten Abschnitt (49) des Dichtungsrings bestimmt ist, der einen Querschnitt hat, der von dem im Wesentlichen runden Querschnitt des ersten Abschnitts abweicht, indem zumindest eine Aussparung (41) vorgesehen ist, die zu der eingefügten Röhre orientiert und zwischen zwei Vorsprüngen (43, 44) platziert ist, **dadurch gekennzeichnet, dass** die Aussparung (41) gemäß einem vorgegebenen Winkel (Q) hinsichtlich der Achse (A) der eingefügten Röhre geneigt ist und die beiden Vorsprünge (43, 44) einen ersten und einen zweiten Vorsprung aufweisen, die unterschiedliche Höhen (H1, H2) von der Fläche (42) des Dichtrings haben.

2. Vorrichtung gemäß Anspruch 1, **gekennzeichnet durch** drei Aussparungen (41), die jeweils zwischen einem Paar bestehend aus dem ersten (43) und dem zweiten (45) Vorsprung angeordnet sind, die unterschiedliche Höhen (H1, H2) von der Fläche (42) des Dichtungsrings haben, wobei die drei Aussparungen (41) an drei Teilen der Innenfläche (42) des Dichtungsrings angeordnet sind, die in Winkeln (A1, A2, A3) angeordnet sind, die sich voneinander unterscheiden.

3. Vorrichtung gemäß Anspruch 1, **dadurch gekennzeichnet, dass** jede Aussparung (41) eine Tiefe in einem Bereich von 5 % bis 15 % des Querschnittsdurchmessers (Ds) des ersten Abschnitts des Dichtungsrings (4) hat.

4. Vorrichtung gemäß Anspruch 1, **dadurch gekennzeichnet, dass** der erste Vorsprung (43) eine Höhe (H1) von der Innenfläche (42) des Dichtungsrings in einem Bereich von 5 % bis 15 % des Querschnittsdurchmessers (Ds) des ersten Abschnitts des Dichtungsrings (4) hat.

5. Vorrichtung gemäß Anspruch 1, **dadurch gekennzeichnet, dass** der zweite Vorsprung (44) eine Höhe (H2) von der Innenfläche (42) des Dichtungsrings in einem Bereich von 3 % bis 8 % des Querschnittsdurchmessers (Ds) des ersten Abschnitts des Dichtungsrings (4) hat.

6. Vorrichtung gemäß Anspruch 1, **dadurch gekennzeichnet, dass** jede Aussparung (41) durch einen umlaufenden Schnitt mit elliptischem Profil entlang eines Ringpfades bestimmt ist.

7. Vorrichtung gemäß Anspruch 1, **dadurch gekennzeichnet, dass** jeder Vorsprung (43, 44) durch eine umlaufende Zugabe mit elliptischem Profil entlang eines Ringpfads bestimmt ist.

8. Vorrichtung gemäß Anspruch 1, **dadurch gekennzeichnet, dass** der Neigungswinkel (Q) der Aussparung (41) hinsichtlich der Achse (A) der eingefügten Röhre eine Funktion des Querschnittsdurchmessers (Ds) des ersten Abschnitts des Dichtungsrings (4) ist.

9. Vorrichtung gemäß Anspruch 1, **dadurch gekennzeichnet, dass** der Winkel (Q) zwischen einer ersten Ebene (P1), die eine Achse (P), die parallel zu der Achse (A) ist, die durch den Mittelpunkt der eingefügten Röhre hindurchtritt, und dieselbe Achse (A) enthält, die durch den Mittelpunkt der eingefügten Röhre und den Mittelpunkt der Aussparung (41) des Dichtungsrings hindurchtritt, und die quer zu dem gesamten Dichtungsring (4) steht, und einer zweiten Ebene (P2) verläuft, die den Mittelpunkt der Aussparung (41) enthält, quer zu dem gesamten Dichtungsring (4) steht und die erste Ebene (P1) an einer Durchmesserachse schneidet, die durch den Mittelpunkt (C) der Aussparung (41) hindurchtritt.

## Revendications

1. Appareil de raccordement à pression comprenant un tube (3), un raccord (2) et une bague d'étanchéité (4) à loger à l'intérieur d'une nervure (13) du raccord à pression dans lequel le tube (3) doit être inséré, ledit appareil de raccordement à pression comprenant au moins un espace (4) entre le raccord à pression conjointement avec la bague d'étanchéité et le tube qui est fermé en appliquant une action de pression sur au moins une partie du raccord à pression pour fournir un raccordement étanche non amovible entre le tube et le raccord à pression, la bague d'étanchéité (4) comprenant au moins une première partie (48) le long de la majeure partie de sa circonférence qui est définie par une section transversale sensiblement circulaire, ayant un diamètre donné (D1', D1"), ledit espace étant déterminé par une seconde partie (49) de la bague d'étanchéité ayant une section transversale qui dévie de ladite section transversale sensiblement circulaire de la première partie en proposant au moins un évidement (41) orienté vers le tube inséré et placé entre deux saillies (43, 44), **caractérisé en ce que** ledit évidement (41) est incliné selon un angle donné (Q) par rapport à l'axe (A) du tube inséré et lesdites deux saillies (43, 44) comprennent une première et une seconde saillie ayant des hauteurs différentes (H1, H2) par rapport à la surface (42) de la bague d'étanchéité.

2. Appareil selon la revendication 1, **caractérisé en ce qu'**il comprend trois évidements (41), chacun agencé entre une paire desdites première (43) et seconde (45) saillies ayant des hauteurs (H1, H2) différentes par rapport à la surface (42) de la bague d'étanchéité, lesdits trois évidements (41) étant agencés sur trois parties de la surface interne (42) de la bague d'étanchéité qui sont agencées à des angles (A1, A2, A3) différents les uns des autres.

3. Appareil selon la revendication 1, **caractérisé en ce que** chaque évidement (41) a une profondeur comprise entre 5% et 15% du diamètre de corde (Ds) de la première partie de la bague d'étanchéité (4).

4. Appareil selon la revendication 1, **caractérisé en ce que** ladite première saillie (43) a une hauteur (H1) par rapport à la surface interne (42) de la bague d'étanchéité comprise entre 5% et 15% du diamètre de corde (Ds) de la première partie de la bague d'étanchéité (4).

5. Appareil selon la revendication 1, **caractérisé en ce que** ladite seconde saillie (44) a une hauteur (H2) par rapport à la surface interne (42) de la bague d'étanchéité comprise entre 3% et 8% du diamètre de corde (Ds) de la première partie de la bague d'étanchéité (4).

6. Appareil selon la revendication 1, **caractérisé en ce que** chaque évidement (41) est déterminé par la coupe en révolution d'un profil elliptique le long d'une trajectoire de bague.

7. Appareil selon la revendication 1, **caractérisé en ce que** chaque saillie (43, 44) est déterminé par l'ajout en révolution d'un profil elliptique le long d'une trajectoire de bague.

8. Appareil selon la revendication 1, **caractérisé en ce que** l'angle d'inclinaison (Q) de l'évidement (41) par rapport à l'axe (A) du tube inséré dépend du diamètre de corde (Ds) de la première partie de la bague d'étanchéité (4).

9. Appareil selon la revendication 1, **caractérisé en ce que** l'angle (Q) est compris entre un premier plan (P1) comprenant un axe (P) parallèle audit axe (A) passant par le point central du tube inséré et le même axe (A) passant par le point central du tube inséré et le point central de l'évidement (41) de la bague d'étanchéité et transversal à la totalité de la bague d'étanchéité (4) et un second plan (P2) comprenant le point central de l'évidement (41), transversal par rapport à toute la bague d'étanchéité (4) et coupant le premier plan (P1) sur un axe de diamètre passant par le point central (C) de l'évidement (41).
